# EUROPEAN PATENT SPECIFICATION

(11) **EP 3 415 850 B1**
(45) Date of publication and mention of the grant of the patent: **25.03.2020**
(21) Application number: 18177872.1
(22) Date of filing: 14.06.2018
(51) Int. Cl.: F27B 9/12, B29C 71/02, F16D 69/02, F27B 9/24, F27B 9/30, F27B 9/36

(54) **PLANT FOR CARRYING OUT HEAT TREATMENTS WITH CONTROLLED TEMPERATURE PROFILES ON FRICTION ELEMENTS, IN PARTICULAR BRAKE PADS, AND ASSOCIATED METHOD**
ANLAGE ZUR DURCHFÜHRUNG VON WÄRMEBEHANDLUNGEN MIT KONTROLLIERTEN TEMPERATURPROFILEN AUF REIBELEMENTEN, INSBESONDERE BREMSBELÄGEN, UND ZUGEHÖRIGES VERFAHREN
INSTALLATION POUR EFFECTUER DES TRAITEMENTS THERMIQUES AVEC DES PROFILS DE TEMPÉRATURE CONTRÔLÉS SUR DES ÉLÉMENTS DE FRICTION, EN PARTICULIER DES PLAQUETTES DE FREIN ET PROCÉDÉ ASSOCIÉ

(30) Priority: 14.06.2017 IT 201700065998
(43) Date of publication of application: 19.12.2018
(73) Proprietor: ITT Italia S.r.l., 20020 Lainate (MI) (IT)
(72) Inventor: DE DOMINICIS, Sandro, 20020 LAINATE (MI) (IT)
(74) Representative: Plebani, Rinaldo

(56) References cited:
- EP-B1- 2 895 767
- WO-A1-2014/162282
- WO-A2-02/50448

## Description

### Technical Field of the Invention

The present invention relates to a plant and associated method for carrying out heat treatments on friction elements, in particular on braking elements such as brake pads fitted with electronic circuitry on board and that therefore require to be subjected to specific controlled temperature profiles.

### Prior Art

The friction elements, in particular vehicle breaking elements, such as break shoes in drum brakes and brake pads in disk brakes, are composed of a metallic support and a block of friction material, that is molded directly onto the metallic support, or else that is separately molded and subsequently glued to the metallic support. The block of friction material, once molded and positioned on the metallic support must however be subjected to heat treatments that improve the characteristics thereof. During such heat treatments the block of friction material must reach certain temperature profiles, both at the core and at the surface and two types of oven are therefore used: a convention oven for treating the core and an IR irradiation heating oven for treating the surface.

During the convective heating, which is generally carried out before the IR heating, all of the brake pad, including the metallic support, is heated to a uniform temperature, of around 200°C or a little higher.

On the other hand, during the IR treatment much higher temperatures must be reached at the surface of the block of friction material opposite the support, greater than 350°C

Even if during the IR treatment, the surface of the block of friction material opposite the metallic support is lapped by a current of air, for example according to that illustrated in WO02/50448, with the aim of better controlling the surface temperature of the brake pads, in particular with the aim of rendering it uniform, such a current of air does not impede the fact that once the desired surface temperature has been reached the heating may also have affected, due to thermal conduction, the lower layers of the brake pads and in particular the metallic support or "backplate", that supports the block of friction material.

For example, during a standard IR treatment, in order to make the surface of the block of friction material opposite the backplate reach the desired treatment temperature, comprised between 360 and 380°C, induced heating is produced of the metallic support up to temperatures in the order of 270-280°C.

This consequential heating of the metallic support has never in the past been an inconvenience. However, some modern brake pads now carry sophisticated electronic systems on board, such as the one described in EP2895767B1, which are mounted directly onto the metallic support, typically between the metallic support and the block of friction material. It was found that subjecting such electronic systems to temperatures above 250°C results in the disabling thereof or otherwise compromises the optimal operation thereof during use. However, currently there is no known heat treatment, other than IR, that is able to take the surface of the block of friction material opposite the metallic support (and which is that intended during use to cooperate with the brake disc) to the necessary temperature and to guarantee the same physical and tribological characteristics of the friction material.

### Summary of the Invention

The aim of the present invention is that of supplying a plant and associated method for carrying out heat treatments on friction elements, in particular on braking elements such as brake pads, that makes it possible to reach the necessary temperature on the surface of the block of friction material opposite the metallic support, for example more than 350°C, maintaining, at the same time, the metallic support at a temperature less than 250°C. Another object of the invention is that of obtaining such a result whilst continuing to use conventional IR ovens.

The invention therefore relates to a plant and to an associated method for carrying out heat treatments of friction elements, in particular a surface heat treatment for braking elements such as brake pads, having the characteristics set forth in the annexed claims.

### Brief Description of the Drawings

Further characteristics and advantages of the present invention will become clear from the following description of an exemplary non-limiting embodiment thereof given purely by way of example and with reference to the figures in the accompanying drawings, wherein:
- Figure 1 illustrates a schematic transverse view in elevation of a plant for the heat treatment of friction elements, in particular brake pads, including an IR heating oven;
- Figure 2 illustrates an enlarged scale schematic transverse view in elevation of a detail of the plant in figure 1;
- Figure 3 illustrates an enlarged scale plan view from above of a component of the plant in figure 1; and
- Figure 4 illustrates a temperature/time diagram reporting the temperature profiles that can be obtained on friction elements, in particular brake pads, treated using the plant of figure 1.

### Detailed Description

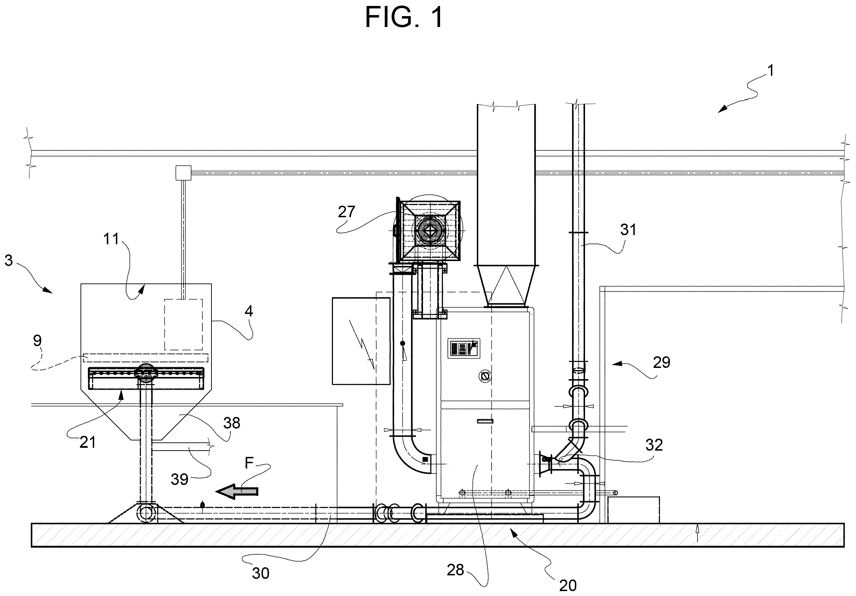

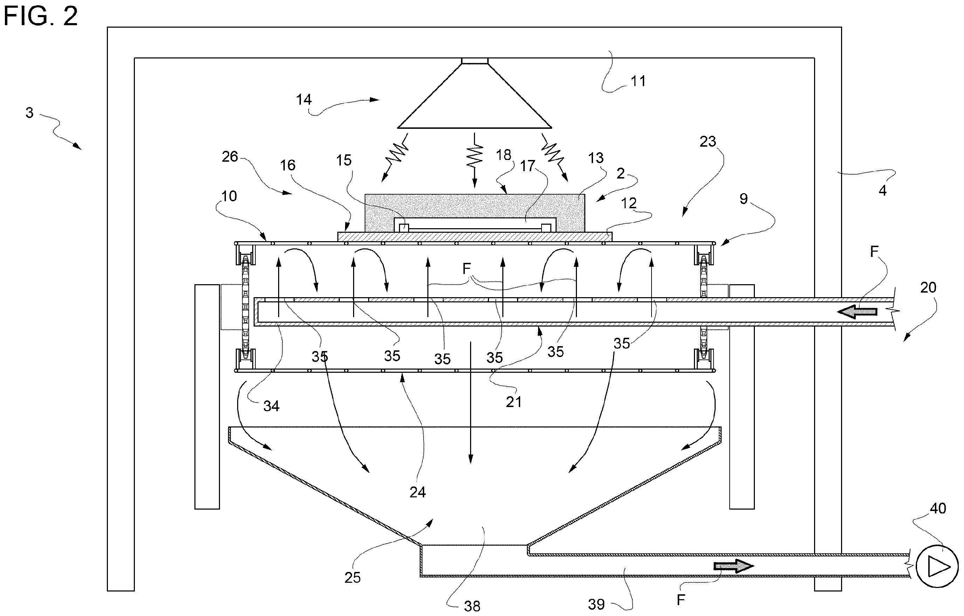

With reference to figures 1 to 3, indicated as a whole with 1 is a plant for the heat treatment of braking elements 2, in particular sensorized brake pads (figure 2), which for simplicity are illustrated schematically only. More generally, the plant 1, though designed to treat sensorized braking elements, can carry out a desired heat treatment on friction elements of any type also without electronic circuitry on board, for example normal brake pads, brake shoes and clutch discs. In the following non-limiting description, without the loss of any information in general, specific reference will be made to sensorized brake pads.

The plant 1 comprises a tunnel oven 3 specifically designed for the surface heat treatment of friction elements 2 by means of treatment with infrared heaters 14, in this case consisting of a plurality of IR lamps, which are known, of which only one is illustrated schematically in Figure 2 for simplicity.

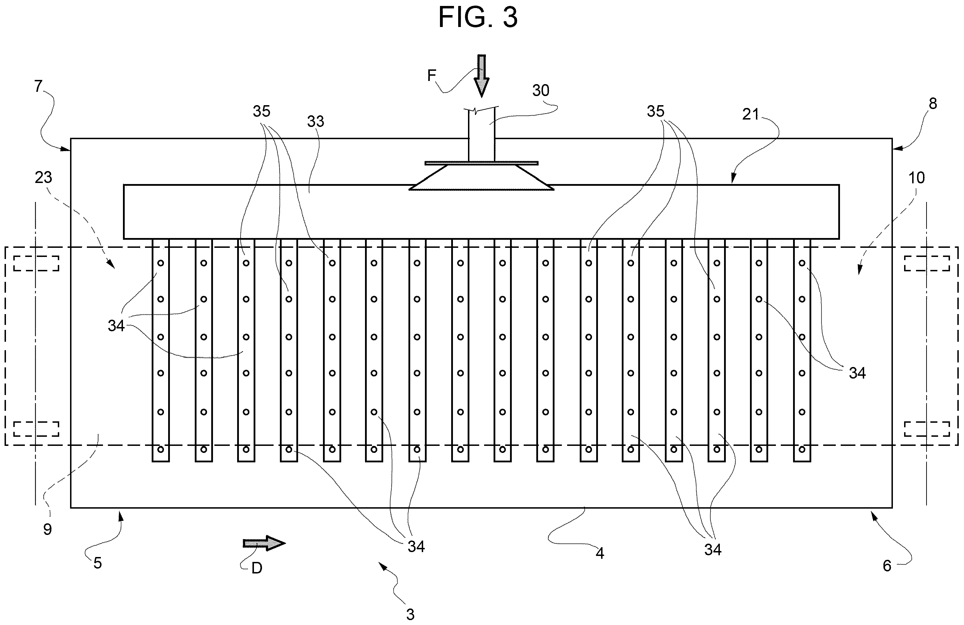

The oven 3 comprises a tunnel shaped protective casing 4 extending longitudinally between a first open end 5 thereof and a second open end 6 thereof, mutually opposing, delimiting an inlet opening 7 and an outlet opening 8 of the tunnel oven 3 (figure 3).

The tunnel oven 3 is crossed by a conveyor device 9 passing through, which is longer than the oven 3 and well illustrated in figures 1, 2 and 3, arranged within the tunnel casing 4 and that traverses the openings of the inlet 7 and outlet 8, in such a way as to emerge from both ends to the outside of the oven 3; the conveyor device 9 shows a resting surface 10 able to receive a plurality of friction elements 2 to be treated, arranged adjacent without overlapping and spaced apart in order to transport them between the inlet opening 7 and the outlet opening 8.

The plurality of infrared heaters 14 is arranged on a ceiling or top 11 of the casing 4 and the conveyor device 9 is configured in order to receive the friction elements 2 to be treated on the side of a metal support 12 thereof; the conveyor device 9 is furthermore arranged below the infrared heaters 14 and is configured in order to face towards the infrared heaters 14 a block 13 of friction material of the friction elements 2 to be treated, opposite the metallic support 12.

In the preferred exemplary embodiment illustrated, the friction elements 2 are sensorized brake pads provided with an electronic circuit 15 on board mounted directly on the metallic support 12, against an upper face 16 whereto the block of friction material 13 is integrally attached. The electronic circuit 15 is arranged between the face 16 and the block of friction material 13 embedded in a layer 17 of electrically insulating material interposed between the block of friction material 13 and the electric circuit 15 and integrally attached to the face 16.

The infrared heaters 14 are independent therebetween and arranged sequentially within the tunnel casing 4 along a direction of travel D (indicated by the arrow in figure 3) in such a way that the protective tunnel casing 4 contains the plurality of heating devices 14. In this way the infrared heaters 14 are configured in order to heat by irradiation, to a predetermined temperature, higher than 350°C, an external surface 18 of the block 13 of friction material facing the side opposite the face 16.

According to an aspect of the invention, the plant 1 furthermore comprises a device 20 for feeding a flow F of cold air, in this case cooled/refrigerated air, as will be seen, in the oven 3 and towards the metallic support 12 of the friction elements 2 to be treated.

In particular, the device 20 for feeding cold/cooled air comprises a distributor 21 for evenly feeding the flow F of cold/cooled air over the entire extension of the floor plan of the conveyor device 9, from a side opposite that facing the infrared heaters 14, in the example illustrated from the bottom towards the top, directly below, or at the height of, the conveyor device 9.

The conveyor device 9 consists of an endless belt conveyor 22 of a known type showing a first, upper branch 23, defining the resting surface 10 for the friction elements 2 to be treated and which faces the infrared heaters 14, and a second, lower branch 24, arranged on the side of the distributor of cold air 21. Preferably, the distributor 21 feeds the flow F of cold/cooled air evenly over the entire floor plan of the conveyor device 9, from the bottom towards the top directly beneath the upper branch 23 of the conveyor 22 and in this case between the upper branch 23 and the lower branch 24.

The endless belt conveyor 22 is implemented in such a way that the resting surface 10 is permeable to cold air, which is fed from the distributor 21 below the resting surface 10 and towards the infrared heaters 14, in such a way that the flow of cold air F can directly reach the metallic supports 12 resting on the surface 10. For example, the endless belt 22 is implemented by means of grills or perforated elements connected therebetween in an articulated manner or else by means of a single perforated flexible belt.

According to another aspect of the invention, the device feeding cold air 20 further comprises a catchment 25 arranged below the distributor 21 and configured in order to extract from the oven 3 the cold air F fed from the distributor before the flow F of cold air can pass over the conveyor device 9 in order to reach an empty space 26 comprised between the conveyor device 9 and the infrared heaters 14, in such a way that only the metallic support 12 of the friction elements 2 to be treated is lapped by the cold air F. In practice, the flow F of cold/cooled air follows the 180° curved path illustrated by the arrows in figure 2.

The catchment 25, in the non-limiting example illustrated, comprises an extractor hopper 38 arranged below the distributor 21 and immediately beneath the conveyor device 9, connected to a piping 39 which is connected to a fan 40.

The device 20 feeding cold air further comprises (figure 1): an environmental air suction fan 27; a refrigerating unit 28 for cooling the flow F of environmental air aspirated by the suction fan 27 at an adjustable predetermined temperature, preferably comprised between 5°C and 30°C and even more preferably comprised between 5°C e 15°C depending upon the season and heat treatment cycle carried out; and a system 29 of piping 30,31 for feeding the cooled environmental air F to the distributor 21 at a determined flow rate.

Therefore, according to an aspect of the invention, the refrigerated air that forms the flow F of cooled air must always be at a lower temperature than the environmental air, i.e., the refrigerated air of the flow F is colder than the environmental air.

The piping system 29 also comprises a diverter valve 32 mounted immediately downstream of the refrigerating unit 28 and configured for selectively feeding all or part of the cold/refrigerated air generated by the refrigerating unit 28 in a first piping 30 connected to the distributor 21 and at least part of it in a second piping 31 that can be connected to an atmospheric outlet (known and for simplicity not illustrated) and therefore flowing into the external environment and/or with a second oven that is identical or similar to the oven 3 for the heat treatment, in parallel to the oven 3, of the brake pads 2.

In this way it is possible to precisely adjust the flow rate of the flow of cold air F within the tube 30, according to the heat treatment cycle (therefore according to the traveling speed of the conveyor device 9 and the power of the IR lamps 14).

The temperature and the flow rate of the flow F of refrigerated air is preferably chosen in such a way that the flow F of refrigerated air is capable of removing by convention a quantity of heat from the metallic supports 12 which is substantially equal to or a little less than that which reaches the metallic supports 12, principally by means of irradiation and conduction.

According to a further aspect of the invention, the distributor 21 is comb shaped in plan and comprises a manifold 33 (figure 3) arranged parallel to the conveyor device 9, on one lateral flank of the same, and a plurality of blind pipes 34, that in this case are cantilevered from the manifold 33, transversely to the same and to the conveyor device 9, evenly-spaced with respect to one another; each blind pipe 34 being provided with a plurality of radial holes 35 facing an upper branch 23 of the conveyor device 9 and the infrared heaters 14.

On the basis of that which has been described, it is evident that the invention also relates to a method for the heat treatment of friction elements such as sensorized brake pads 2, each comprising a metallic support 12 provided with electronic elements 15 on board and a block of friction material 13 integrally attached to a first face 16 of the metallic support 12 provided with some electronic elements 15, which are arranged between the metallic support 12 and the block of friction material 13.

The method comprises an infrared irradiation heating step, obtained using a plurality of IR lamps 14, of an external surface 18 of the block of friction material 13 opposite the metallic support 12 which is prolonged until the surface 18 is taken to a predetermined temperature, greater than 350°C; such an infrared irradiation heating step takes place in the tunnel oven 2, whilst the friction elements advance along the conveyor device 9.

The method according to the invention furthermore comprises the steps of: aspirating a flow F of environmental air at a predetermined flow rate, cooling the environmental air aspirated by means of the refrigerating unit 28, feeding the flow F of cooled environmental air against the metallic support 12 of the friction elements 2 during the infrared irradiation heating step and simultaneously aspirating the cooled environmental air before it can lap over the block of friction material 13, in such a way as to carry out a localized cooling only of the metallic support 12 of the friction elements 2 to be treated.

During the infrared irradiation heating step the friction elements 2 to be treated are laid-over on the side of the metallic support 12, spaced apart and without overlapping, on the conveyor device 9, which is configured in order to be crossed from the bottom to the top by the cooled environmental air F whilst the block of friction material 13 of the friction elements 2 to be treated is heated from the top to the bottom by the IR lamps 14; the cooled environmental air F is furthermore evenly fed over the entire extension floor plan of the conveyor device 9 by means of a comb shaped distributor 21 arranged between a first side of the conveyor device 9 defined by the upper branch 23 and a second side of the conveyor device 9 defined by the lower branch; the upper branch 23 receives the friction elements 2 to be treated and faces respective infrared heaters 14 by means of which the heating step is carried out.

In order to obtain the desired results, the environmental air F is cooled to a temperature comprised between 5°C e 30°C and preferably cooled to a temperature comprised between 5°C e 15°C.

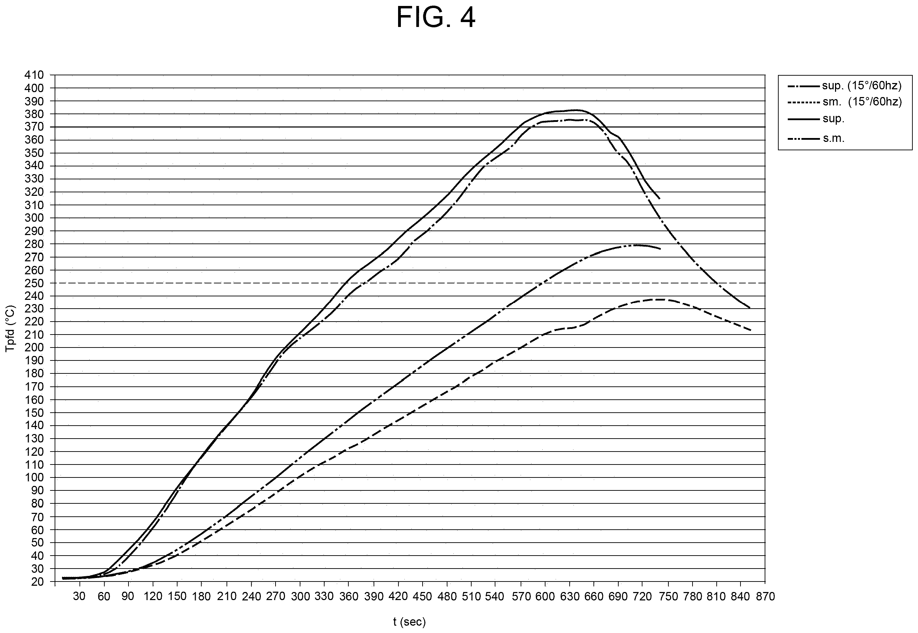

The sensorized plant 1 and the relative treatment method of the brake pads 2 were experimentally tested in an establishment of the Applicant, having fitted the brake pads 2 being treated with a series of thermocouples. The results obtained are represented by the graph of figure 4, which represents the temperature trend over time of various portions of a brake pad 2: the continuous line graph represents the temperature trend at the surface 18 when the device 20 feeding cooled air F is deactivated (and therefore as though it were not present), whilst the dashed and dotted line graph represents the temperature trend at the surface 18 when the device 20 feeding cooled air F is active.

The dashed and twice dotted line graph represents the temperature trend at the face 16 of the support 12 (and, therefore, also of the electronic circuit 15) when the device 20 feeding cooled air F is deactivated (and therefore as though it were not present), whilst the dashed line graph represents the temperature trend at the face 16 of the support 12 (and, therefore, also of the electronic circuit 15) when the device 20 feeding cooled air F is active.

As can be seen from the graph lines of figure 4, in the absence of the flow F of cold air and in order to reach the treatment temperature required at the surface 18, the face 16 (and together with it the electronic circuit 15) reach a temperature in the order of 280°C, well above the temperature limit of 250°C within which the electronic circuit 15 maintains the efficiency thereof.

On the other hand, with the device 20 active, the temperature reached at the surface 18 is only a little lower, equal to 375°C, which is more than sufficient to obtain an optimal IR heat treatment, whilst the temperature at the face 16 is always maintained below 250°C and reaches a maximum temperature of just below 240°C, making it possible for the electronic circuit 15 to remain efficient.

Each object of the invention has thus been achieved.

## Claims

1. Plant (1) for the heat treatment of friction elements (2), in particular sensorized braking elements such as brake pads, comprising: a first oven (3) including a tunnel shaped casing (4) and a plurality of infrared heaters (14) arranged on a ceiling (11) of the casing; and a conveyor device (9) configured for receiving the respective friction elements (2) to be treated on the metallic support (12) side thereof, the conveyor device crossing by passing through the tunnel casing, from a first to a second mutually opposing open end (5,6) thereof, the conveyor device being below the infrared heaters (14) and configured such as to face, towards the infrared heaters, a block of friction material (13) of the friction elements to be treated, that is opposite the metallic support (12) thereof; wherein it further comprises:
i)- a device (20) feeding cold air into the first oven (3) and towards the metallic support (12) of the friction elements to be treated; the device feeding cold air (20) comprising a distributor (21) in order to feed the cold air (F) evenly over the entire floor plan of the conveyor device (9), from an opposite side to that facing the infrared heaters (14); **characterized in that, in combination with i) it further comprises**
ii)- a catchment (25) configured in such a way as to extract from the oven the cold air (F) fed from the distributor before the cold air can pass beyond the conveyor device (9) thereby reaching an empty space (26) comprised between the conveyor device (9) and the infrared heaters (14), such that only the metallic support (12) of the friction elements to be treated is lapped by the cold air (F).

2. Plant according to claim 1, **characterized in that** the conveyor device (9) consists of an endless belt conveyor (22) showing a first upper branch (23), defining a resting surface (10) for the friction elements to be treated facing the infrared heaters and a second lower branch (24), arranged beneath the distributor (21) of cold air; the endless belt conveyor being implemented such that the resting surface (10) is permeable to the cold air, which is fed from the distributor below the resting surface (10) and towards the infrared heaters (14).

3. Plant according to claim 1 or 2, **characterized in that** said catchment (25) is an integral part of the device feeding cold air (20) and is arranged beneath the distributor (21).

4. Plant according to one of the preceding claims, **characterized in that** the device feeding cold air (20) further comprises: an environment air suction fan (27); a refrigerating unit (28) to cool the environment air aspirated by the suction fan to a predetermined temperature; and a piping system (29) for feeding the cooled environment air to the distributor.

5. Plant according to claim 4, **characterized in that** the piping system (29) comprises a diverter valve (32) mounted immediately downstream of the refrigerating unit (28) and configured for selectively feeding the cold air generated by the refrigerating unit in all or part into a first piping (30) connected to the distributor (21) and at least partially into a second piping (31) that can be connected to an atmospheric outlet and/or to a second oven.

6. Plant according to one of the preceding claims, **characterized in that** the infrared heaters (14) consist of IR lamps.

7. Plant according to one of the preceding claims, **characterized in that** the distributor (21) is comb shaped in plan and comprises a manifold (33) arranged parallel to the conveyor device (9), on one lateral flank of the same, and a plurality of blind pipes (34) that are cantilevered from the manifold (33), transversely from the same and from the conveyor device (9), evenly-spaced with respect to one another; each blind pipe (34) being provided with a plurality of radial holes (35) facing an upper branch (23) of the conveyor device (9) and the infrared heaters (14).

8. Method for the heat treatment of friction elements (2), and in particular sensorized braking elements (2) such as brake pads, each comprising a metallic support (12) provided with electronic elements (15) on board and a block of friction material (13) integrally attached to a first face (16) of the metallic support provided with the electronic elements (15), which are arranged between the metallic support (12) and the block of friction material (13); the method comprising the step of heating, by means of infrared radiation, a surface (18) of the block of friction material opposite the metallic support (12); **characterized in that** it furthermore comprises, in combination:
i)- the step of aspirating environmental air, cooling the aspirated environmental air, and feeding, during the infrared irradiation heating step, a flow (F) of cooled environmental air against the metallic support (12) of the friction elements; and
ii)- the step of aspirating the cooled environmental air simultaneously with the step of feeding the flow (F) of cooled environmental air, in such a way that the cooled environmental air is aspirated before it can lap over the block (13) of friction material, in such a way as to carry out a localized cooling only of the metallic support (12) of the friction elements to be treated.

9. Method according to claim 8, **characterized in that** during the infrared irradiation heating step the friction elements to be treated are laid-over on the side of the metallic support (12), spaced apart and without overlapping, on a conveyor device (9) configured to be crossed, from the bottom towards the top, by the cooled environment air (F), while the block of friction material (13) of the friction elements to be treated is heated from the top towards the bottom; the cooled environmental air (F) being fed evenly over the entire floor plan of the conveyor device (9) by means of a distributor (21) that is comb shaped, arranged on a first side (9) defined by an upper branch (23) thereof that receives the friction elements to be treated (2) and that faces respective infrared heaters (14) by means of which the heating step is performed, and a second side of the conveyor device (9) opposite the first, and defined by a lower branch (24) of the conveyor device.

10. Method according to claim 8 or 9, **characterized in that** the environmental air (F) is cooled to a temperature comprised between 5°C and 30°C and preferably comprised between 5°C and 15°C.

## Patentansprüche

1. Anlage (1) zur Wärmebehandlung von Reibelementen
(2), insbesondere sensorische Bremselemente wie Bremsbeläge, umfassend: einen ersten Ofen (3) mit einem tunnelförmigen Gehäuse (4) und mehreren an einer Decke (11) des Gehäuses angeordneten Infrarotheizungen (14); und eine Fördervorrichtung (9), die zum Aufnehmen der jeweiligen Reibelemente (2), die an der Seite des metallischen Trägers (12) der Vorrichtung behandelt werden sollen, konfiguriert ist, wobei die Fördervorrichtung durch Passieren des Tunnelmantels von einer ersten zu einem zweiten diesem gegenüberliegenden offenen Ende (5, 6) wechselt, wobei sich die Fördervorrichtung unterhalb der Infrarotheizungen (14) befindet und so konfiguriert ist, dass sie einen Block aus Reibmaterial (13) der zu behandelnden Reibelemente, der dem metallische Träger (12) davon gegenüberliegt, in Richtung der Infrarotheizungen auszurichten; wobei sie ferner umfasst:
i)- eine Vorrichtung (20), die kalte Luft in den ersten Ofen (3) und in Richtung des metallischen Trägers (12) der zu behandelnden Reibelemente zuführt; wobei die kaltluftführende Vorrichtung (20) einen Verteiler (21) umfasst, um die Kaltluft (F) gleichmäßig über den gesamten Grundriss der Fördervorrichtung (9) zuzuführen, von einer abgewandten Seite zu der den Infrarotheizungen (14) zugewandten Seite;
**dadurch gekennzeichnet, dass** sie in Kombination mit i) ferner umfasst
ii)- eine Stauscheibe (25), die so konfiguriert ist, dass die vom Verteiler zugeführte Kaltluft (F) aus dem Ofen abgezogen wird, bevor die Kaltluft die Fördervorrichtung (9) passieren kann, wodurch ein leerer Raum (26), der zwischen der Fördervorrichtung (9) und den Infrarotheizungen (14) liegt, erreicht wird, so dass nur der metallische Träger (12) der zu behandelnden Reibelemente von der Kaltluft (F) umspült wird.

2. Anlage nach Anspruch 1, **dadurch gekennzeichnet, dass** die Fördervorrichtung (9) aus einem Endlosbandförderer (22) besteht, der einen ersten oberen Zweig (23) aufweist, der eine Auflagefläche (10) für die zu behandelnden Reibelemente gegenüber den Infrarotheizungen und einem zweiten unteren Zweig (24), der unterhalb des Verteilers (21) für Kaltluft angeordnet ist, definiert; wobei der Endlosbandförderer so ausgebildet ist, dass die Auflagefläche (10) für die Kaltluft durchlässig ist, die von dem Verteiler unterhalb der Auflagefläche (10) und zu den Infrarotheizungen (14) zugeführt wird.

3. Anlage nach Anspruch 1 oder 2, **dadurch gekennzeichnet, dass** die Stauscheibe (25) ein integraler Bestandteil der kaltluftführenden Vorrichtung (20) und unterhalb des Verteilers (21) angeordnet ist.

4. Anlage nach einem der vorhergehenden Ansprüche, **dadurch gekennzeichnet, dass** die kaltluftführende Vorrichtung (20) ferner umfasst: ein Umgebungsluft-Ansauggebläse (27); eine Kühleinheit (28) zum Kühlen der vom Ansauggebläse angesaugten Umgebungsluft auf eine vorbestimmte Temperatur; und ein Leitungssystem (29) zum Zuführen der gekühlten Umgebungsluft in den Verteiler.

5. Anlage nach Anspruch 4, **dadurch gekennzeichnet, dass** das Leitungssystem (29) ein Umlenkventil (32) umfasst, das unmittelbar stromabwärts des Kühlaggregats (28) angebracht ist und dazu konfiguriert ist, die vom Kühlaggregat erzeugte Kaltluft wahlweise ganz oder teilweise in eine erste Leitung (30), die mit dem Verteiler (21) verbunden ist, und zumindest teilweise in eine zweite Leitung (31), die mit einem atmosphärischen Auslass und/oder einem zweiten Ofen verbunden werden kann, einzuspeisen.

6. Verfahren nach einem der vorhergehenden Ansprüche, **dadurch gekennzeichnet, dass** die Infrarotheizungen (14) aus IR-Strahlern bestehen.

7. Anlage nach einem der vorhergehenden Ansprüche, **dadurch gekennzeichnet, dass** der Verteiler (21) in der Draufsicht kammförmig ist und ein Ansaugrohr (33), das parallel zu der Fördervorrichtung (9) an einer seitlichen Flanke dieser angebracht ist, und eine Vielzahl von Blindrohren (34), die von dem Ansaugrohr (33) quer von demselben und von der Fördervorrichtung (9) in gleichmäßigem Abstand voneinander herauskragend sind, umfasst; wobei jedes Blindrohr (34) mit einer Vielzahl von radialen Löchern (35) versehen ist, die einem oberen Zweig (23) der Fördervorrichtung (9) und den Infrarotheizungen (14) zugewandt sind.

8. Verfahren zur thermischen Behandlung von Reibelementen (2), und insbesondere Bremselemente (2) wie Bremsbelägen, die jeweils einen metallischen Träger (12) mit elektronischen Elementen (15) daran und einen Block aus Reibmaterial (13), der einstückig an einer ersten Fläche (16) des metallischen Trägers mit den elektronischen Elementen (15), die zwischen dem metallischen Träger (12) und dem Block aus Reibmaterial (13) angeordnet sind, angebracht ist; wobei das Verfahren den Schritt des Erhitzens einer dem metallischen Träger (12) gegenüberliegenden Oberfläche (18) des Blocks aus Reibmaterial mittels Infrarotstrahlung umfasst; **dadurch gekennzeichnet, dass** es ferner in Kombination umfasst:
i)- den Schritt des Ansaugens von Umgebungsluft, des Kühlens der angesaugten Umgebungsluft und des Zuführens eines Stroms (F) gekühlter Umgebungsluft gegen den metallischen Träger (12) der Reibelemente während des Schrittes des Infrarotbestrahlungsheizens; und
ii)- den Schritt des Ansaugens der gekühlten Umgebungsluft gleichzeitig mit dem Schritt des Zuführens des Stroms (F) der gekühlten Umgebungsluft derart, dass die gekühlte Umgebungsluft angesaugt wird, bevor sie über den Block aus Reibmaterial (13) strömen kann, so dass nur der metallische Träger (12) der zu behandelnden Reibelemente örtlich gekühlt wird.

9. Verfahren nach Anspruch 8, **dadurch gekennzeichnet, dass** die zu behandelnden Reibelemente während des Schrittes des Infrarotbestrahlungsheizens auf der Seite des metallischen Trägers (12), beabstandet und ohne zu überlappen auf einer Fördereinrichtung (9) abgelegt werden, die dazu konfiguriert ist, von unten nach oben von der gekühlten Umgebungsluft (F) durchströmt zu werden, während der Block aus Reibmaterial (13) der zu behandelnden Reibelemente von oben nach unten erwärmt wird; wobei die gekühlte Umgebungsluft (F) gleichmäßig über den gesamten Grundriss der Fördervorrichtung (9) mittels eines kammförmigen Verteilers (21) zugeführt wird, der auf einer ersten Seite (9), die durch einen oberen Zweig (23) davon definiert ist, angeordnet ist, der die zu behandelnden Reibelemente (2) aufnimmt und den jeweiligen Infrarotheizungen (14) zugewandt ist, mittels derer der Heizschritt durchgeführt wird, und eine zweite Seite der Fördervorrichtung (9), die gegenüber der ersten liegt und durch einen unteren Zweig (24) der Fördervorrichtung definiert ist, zugeführt wird.

10. Verfahren nach Anspruch 8 oder 9, **dadurch gekennzeichnet, dass** die Umgebungsluft (F) auf eine Temperatur zwischen 5 °C und 30 °C und vorzugsweise zwischen 5 °C und 15 °C abgekühlt wird.

## Revendications

1. Installation (1) pour le traitement thermique d'éléments de friction (2), en particulier d'éléments de freinage munis de capteurs tels que des patins de frein, comprenant : un premier four (3) incluant un boîtier en forme de tunnel (4) et une pluralité d'éléments chauffants à infrarouge (14) disposés sur un plafond (11) du boîtier ; et un convoyeur (9) configuré pour recevoir les éléments de friction (2) respectifs à traiter sur le côté du support métallique (12) de celui-ci, le convoyeur traversant en passant à travers le boîtier en forme de tunnel, d'une première vers une deuxième extrémité ouverte mutuellement opposée (5, 6) de celui-ci, le convoyeur étant en dessous des éléments chauffants à infrarouge (14) et configuré de façon à être tourné, vers les éléments chauffants à infrarouge, vers un bloc de matériau de friction (13) des éléments de friction à traiter, qui est à l'opposé du support métallique (12) de celui-ci ; dans laquelle elle comprend en outre :
i)- un dispositif (20) alimentant de l'air froid dans le premier four (3) et vers le support métallique (12) des éléments de friction à traiter ; le dispositif alimentant de l'air froid (20) comprenant un distributeur (21) pour alimenter l'air froid (F) uniformément sur tout le plan de sol du convoyeur (9), depuis un côté opposé à celui faisant face aux éléments chauffants à infrarouge (14) ;
**caractérisée en ce que**, en combinaison avec i) elle comprend en outre :
ii)- un bassin (25) configuré de manière à extraire du four l'air froid (F) alimenté à partir du distributeur avant que l'air froid ne puisse passer au-delà du convoyeur (9) atteignant de ce fait un espace vide (26) compris entre le convoyeur (9) et les éléments chauffants à infrarouge (14), de telle sorte que seul le support métallique (12) des éléments de friction à traiter est enveloppé par l'air froid (F).

2. Installation selon la revendication 1, **caractérisée en ce que** le convoyeur (9) est constitué d'un transporteur à bande sans fin (22) présentant une première branche supérieure (23), définissant une surface de repos (10) pour les éléments de friction à traiter faisant face vers les éléments chauffants à infrarouge et une deuxième branche inférieure (24), disposée sous le distributeur (21) d'air froid ; le transporteur à bande sans fin étant mis en œuvre de telle sorte que la surface de repos (10) est perméable à l'air froid, qui est alimenté à partir du distributeur en dessous de la surface de repos (10) et vers les éléments chauffants à infrarouge (14).

3. Installation selon la revendication 1 ou 2, **caractérisée en ce que** ledit bassin (25) fait partie intégrante du dispositif alimentant de l'air froid (20) et est disposé sous le distributeur (21).

4. Installation selon l'une des revendications précédentes, **caractérisée en ce que** le dispositif alimentant de l'air froid (20) comprend en outre : un ventilateur d'aspiration d'air ambiant (27) ; une unité frigorifique (28) pour refroidir l'air ambiant aspiré par le ventilateur d'aspiration jusqu'à une température prédéterminée ; et un système de tuyauterie (29) pour alimenter l'air ambiant refroidi au distributeur.

5. Installation selon la revendication 4, **caractérisée en ce que** le système de tuyauterie (29) comprend une vanne de dérivation (32) montée immédiatement en aval de l'unité frigorifique (28) et configurée pour alimenter sélectivement l'air froid généré par l'unité frigorifique en tout ou en partie dans une première tuyauterie (30) reliée au distributeur (21) et au moins partiellement dans une deuxième tuyauterie (31) qui peut être reliée à une sortie atmosphérique et/ou à un deuxième four.

6. Installation selon l'une des revendications précédentes, **caractérisée en ce que** les éléments chauffants à infrarouge (14) sont constitués de lampes infrarouge.

7. Installation selon l'une des revendications précédentes, **caractérisée en ce que** le distributeur (21) est en forme de peigne dans le plan et comporte un collecteur (33) disposé parallèlement au convoyeur (9), sur un flanc latéral de celui-ci, et une pluralité de tuyaux borgnes (34) qui sont en porte-à-faux à partir du collecteur (33), de manière transversale à partir de celui-ci et à partir du convoyeur (9), espacés uniformément l'un par rapport à l'autre ; chaque tuyau borgne (34) étant pourvu d'une pluralité de trous radiaux (35) faisant face vers une branche supérieure (23) du convoyeur (9) et des éléments chauffants à infrarouge (14).

8. Procédé de traitement thermique d'éléments de friction (2), et en particulier d'éléments de freinage munis de capteurs (2) tels que des patins de frein, comprenant chacun un support métallique (12) muni d'éléments électroniques (15) embarqués et un bloc de matériau de friction (13) fixé de manière solidaire à une première face (16) du support métallique munie des éléments électroniques (15), qui sont disposés entre le support métallique (12) et le bloc de matériau de friction (13) ; le procédé comprenant l'étape de chauffage, au moyen d'un rayonnement infrarouge, d'une surface (18) du bloc de matériau de friction opposée au support métallique (12) ; **caractérisé en ce qu'**il comprend en outre, en combinaison :
i)- l'étape d'aspiration de l'air ambiant, de refroidissement de l'air ambiant aspiré, et d'alimentation, durant l'étape de chauffage par rayonnement infrarouge, d'un flux (F) d'air ambiant refroidi contre le support métallique (12) des éléments de friction ; et
ii)- l'étape consistant à aspirer l'air ambiant refroidi simultanément avec l'étape d'alimentation du flux (F) de l'air ambiant refroidi, d'une manière telle que l'air ambiant refroidi est aspiré avant qu'il puisse chevaucher le bloc (13) de matériau de friction, d'une manière telle à effectuer un refroidissement localisé uniquement du support métallique (12) des éléments de friction à traiter.

9. Procédé selon la revendication 8, **caractérisé en ce que** lors de l'étape de chauffage par rayonnement infrarouge les éléments de friction à traiter sont déposés sur le côté du support métallique (12), espacés et sans chevauchement, sur un convoyeur (9) configuré pour être traversé, du bas vers le haut, par l'air ambiant refroidi (F), alors que le bloc de matériau de friction (13) des éléments de friction à traiter est chauffé du haut vers le bas ; l'air ambiant refroidi (F) étant alimenté uniformément sur tout le plan de sol du convoyeur (9) au moyen d'un distributeur (21) qui est en forme de peigne, disposé sur un premier côté (9) défini par une branche supérieure (23) de celui-ci qui reçoit les éléments de friction à traiter (2) et qui est tournée vers des éléments chauffants à infrarouge (14) respectifs au moyen desquels l'étape de chauffage est effectuée, et un deuxième côté du convoyeur (9) opposé au premier, et défini par une branche inférieure (24) du convoyeur.

10. Procédé selon la revendication 8 ou 9, **caractérisé en ce que** l'air ambiant (F) est refroidi jusqu'à une température comprise entre 5 °C et 30 °C et de préférence comprise entre 5 °C et 15 °C.
